# FASCICULE DE BREVET EUROPEEN

(11) **EP 2 554 409 B1**
(45) Date de publication et mention de la délivrance du brevet: **01.06.2016**
(21) Numéro de dépôt: 12305832.3
(22) Date de dépôt: 11.07.2012
(51) Int. Cl.: B60G 17/019, B60G 21/055

(54) **DISPOSITIF D'INDICATION DE LA CHARGE D'UN VEHICULE AUTOMOBILE**
Ladungsanzeigevorrichtung eines Kraftfahrzeugs
Device for indicating the load of a motor vehicle

(30) Priorité: 01.08.2011 FR 1157045
(43) Date de publication de la demande: 06.02.2013
(73) Titulaire: Derisys, 71710 Montcenis (FR)
(72) Inventeur: Petit, Patrick, 71200 LE CREUSOT (FR)
(74) Mandataire: Cabinet Laurent & Charras

(56) Documents cités:
- EP-A1- 2 072 294
- FR-A1- 2 561 591
- FR-A1- 2 877 893
- US-A- 5 032 821

## Description

### DOMAINE TECHNIQUE

L'invention se rapporte au domaine des dispositifs d'information et de sécurité équipant des véhicules automobiles, notamment industriels de type camions, fourgons ou encore des véhicules utilitaires. De tels véhicules ont généralement une charge utile limitée par une réglementation internationale, et qu'ils n'ont pas le droit de dépasser. De plus, une charge excessive de ces véhicules peut, par exemple, engendrer un allongement des distances d'arrêt et perturber le comportement du véhicule en mouvement.

L'invention vise plus particulièrement un dispositif permettant de communiquer à l'utilisateur du véhicule une information relative à la charge de son véhicule lors de son chargement et/ou avant d'en prendre la conduite.

### TECHNIQUES ANTERIEURES

De façon générale, il est connu d'équiper des véhicules avec des dispositifs aptes à fournir à l'utilisateur du véhicule une indication sur la charge qu'il transporte. Ce type de dispositif fonctionne selon le principe de la mesure du déplacement d'un point d'un organe mobile par rapport au châssis du véhicule.

Ainsi, pour mesurer le déplacement d'un point mobile du véhicule dans une zone située à l'avant de ce véhicule, on mesure le déplacement d'une pièce mobile tel un triangle ou une biellette de suspension. Ainsi, avec ce type de dispositif, il est nécessaire d'équiper chacune des deux roues avant du véhicule.

Le document FR 2877 893 décrit la liaison entre un capteur angulaire et une barre anti-devers.

Un objectif de l'invention est par conséquent de simplifier ce type de dispositif, notamment en réduisant le nombre de capteurs équipant l'essieu d'un véhicule et en équipant cet essieu d'un unique capteur de mesure.

### DESCRIPTION DE L'INVENTION

L'invention concerne donc un dispositif d'indication de la charge d'un véhicule automobile.

Selon l'invention, ce dispositif se caractérise en ce qu'il comporte :
- un moyen de détermination de la position relative d'un point mobile d'une barre anti-roulis par rapport à un point de référence du véhicule, le point mobile étant agencé au niveau d'une zone médiane de la barre anti-roulis ;
- une unité de contrôle apte à générer un signal sensoriel fonction de la position relative.

Autrement dit, ce dispositif permet de limiter le nombre de moyens de détermination puisqu'on mesure la distance entre un point unique mobile et un point de référence du véhicule. En effet, le déplacement de la barre anti-roulis du véhicule permet d'estimer la charge du véhicule indépendamment de l'enfoncement de chacun des amortisseurs des roues de ce véhicule. Ce résultat est obtenu du fait que le déplacement de la barre anti-roulis au niveau d'une zone médiane est fonction de la charge globale du véhicule et non de l'affaissement localisé au niveau d'une roue droite ou gauche de l'essieu considéré.

Par ailleurs, un tel dispositif peut équiper respectivement un essieu avant ou un essieu arrière de véhicule automobile. En effet, chacun de ces essieux peut être équipé d'une barre anti-roulis ou de tout autre élément de liaison mobile réalisant la fonction d'une barre anti-roulis. Ainsi, la positon du point mobile est mesurée sur tout élément mobile réalisant la fonction de barre anti-roulis.

Le signal sensoriel généré par l'unité de contrôle permet alors à l'utilisateur du véhicule de connaître la charge de son véhicule et de stopper son chargement si celui-ci est en cours et qu'il a atteint la charge utile maximale du véhicule. Cette unité de contrôle peut notamment être agencée dans l'habitacle du véhicule.

Une telle barre anti-roulis peut notamment être agencée en liaison pivot par rapport à un essieu et le châssis du véhicule. Ainsi, le point de référence peut être indifféremment choisi sur l'essieu ou le châssis du véhicule.

Selon un premier mode de réalisation, le point de référence peut être solidaire d'un châssis du véhicule.

Dans ce cas, le point de référence peut notamment être formé par une platine solidaire d'une traverse faisant office de structure porteuse du véhicule. Une telle platine peut alors être solidarisée avec la traverse au moyen d'organes de solidarisation tels que des vis, boulons, rivets ou analogues.

Les déplacements du point mobile correspondent ainsi directement aux mouvements de translation verticale de la zone médiane de la barre anti-roulis par rapport au châssis du véhicule. De cette manière la charge du véhicule peut être estimée.

Selon un second mode de réalisation, le point de référence peut être solidaire d'un essieu du véhicule.

Dans cet autre cas de figure, le point de référence peut alors être formé par une bride solidaire de l'essieu du véhicule. Une telle bride est également maintenue sur l'essieu au moyen d'organes de solidarisation tels que des vis, boulons, rivets ou analogues.

De cette manière, les déplacements du point mobile correspondent aux mouvements relatifs de rotation de la barre anti-roulis par rapport à l'essieu du véhicule. Une loi géométrique permet ensuite d'en déduire le déplacement de la zone médiane de la barre anti-roulis par rapport au châssis du véhicule

Avantageusement, l'unité de contrôle peut calculer une valeur à partir des positions respectives du point mobile et du point de référence et générer un signal sensoriel fonction de cette valeur, selon une loi fonction de la géométrie.

En d'autres termes, la position relative du point mobile est convertie en une valeur par l'unité de contrôle qui génère ensuite un signal sensoriel perceptible par l'utilisateur du véhicule automobile.

Selon une première variante, le moyen de détermination de la position relative du point mobile peut comporter une biellette assujettie en liaison rotule avec, d'une part, une patte d'accrochage solidaire du point mobile, et d'autre part, un bras agencé en liaison pivot par rapport au point de référence.

Dans ce cas, la pate d'accrochage est assujettie en liaison encastrement avec la barre anti-roulis et transmet les mouvements de la barre à la biellette puis au bras. Les mouvements du bras par rapport au point de référence sont alors fonction des mouvements de la patte d'accrochage.

Selon une seconde variante, le moyen de détermination de position relative du point mobile comporte une biellette assujettie en liaison rotule avec, d'une part, une patte d'accrochage solidaire du point de référence, et d'autre part, un bras agencé en liaison pivot par rapport au point mobile.

Dans cet autre cas, la pate d'accrochage est assujettie en liaison encastrement avec le point de référence et transmet un repère fixe à la biellette puis au bras. Les mouvements du bras par rapport au point de référence sont alors fonction directement des mouvements de la barre anti-roulis.

Dans les deux cas de figures, le moyen de détermination est insensible à des déplacements relatifs du point mobile par rapport au point de référence dans des plans perpendiculaires à la direction de déplacement du point mobile, cette direction étant sensiblement verticale.

Selon un mode de réalisation particulier, le dispositif peut comporter un capteur apte à mesurer la position angulaire du bras. L'unité de contrôle peut alors être apte à déterminer une information relative à la charge du véhicule en fonction de la valeur de l'angle mesuré par le capteur.

Un tel capteur mesure donc une variation angulaire du bras et l'unité de contrôle convertit cette variation angulaire en un signal sensoriel permettant d'indiquer la charge du véhicule à son utilisateur.

Avantageusement, le capteur peut être choisi parmi le groupe comprenant les capteurs à effet Hall, les codeurs incrémentaux, les accéléromètres et les jauges de déformation.

En pratique, le signal sensoriel peut être de type sonore, visuel ou vibratoire.

Par ailleurs, l'unité de contrôle peut être apte à générer un signal d'alarme lorsque la position relative du point mobile par rapport au point de référence dépasse une valeur de seuil prédéterminée.

Lorsque le signal d'alarme se déclenche, l'utilisateur du véhicule sait qu'il ne doit plus charger le véhicule s'il ne veut pas dépasser la charge utile de son véhicule.

### DESCRIPTION SOMMAIRE DES FIGURES

La manière de réaliser l'invention ainsi que les avantages qui en découlent, ressortiront bien du mode de réalisation qui suit, donné à titre indicatif et non limitatif, à l'appui des figures dans lesquelles :
- la figure 1 est une vue en perspective selon une première variante d'un dispositif d'indication de la charge d'un véhicule, conformément à l'invention ;
- la figure 2 est une vue en coupe selon une seconde variante d'un dispositif d'indication de la charge d'un véhicule, conformément à l'invention.

### MANIERE DE REALISER L'INVENTION

Comme déjà évoqué, l'invention concerne un dispositif d'indication de la charge d'un véhicule automobile.

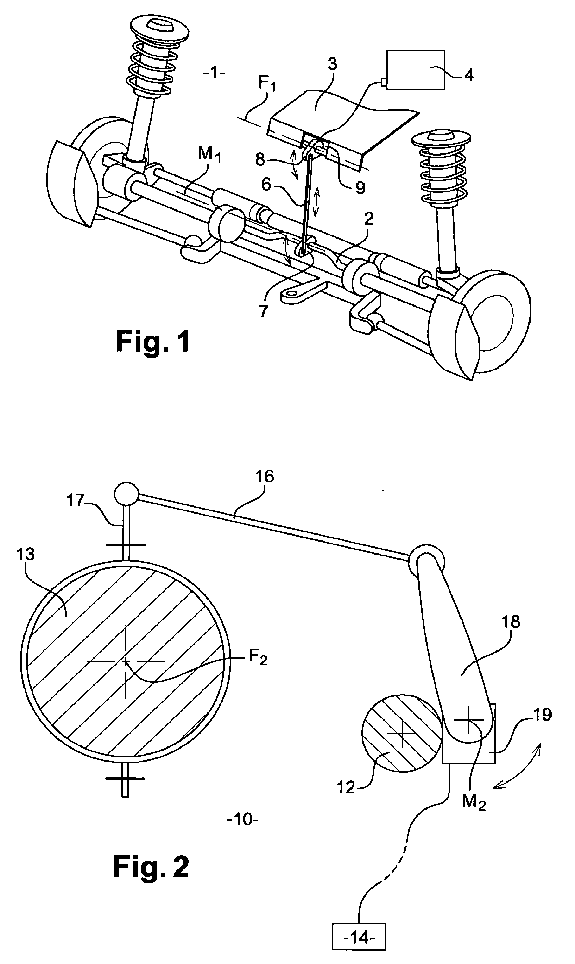

Tel que représenté à la figure 1, un tel dispositif **1** comporte un moyen de détermination de la position relative d'un point mobile **M1** d'une barre anti-roulis **2** par rapport à un point de référence **F1** solidaire d'un châssis d'un véhicule **3.** Le point mobile **M1** se déplace sensiblement verticalement de haut en bas ou de bas en haut lors du chargement ou du déchargement du véhicule. En effet, plus le véhicule est chargé, et plus le point mobile **M1** est proche du châssis **3** du véhicule.

Les mouvements du point mobile **M1** sont transmis, via une patte **7,** une biellette **6** et un bras **8,** à un capteur **9** solidaire du châssis **3.** Une telle biellette **6** est avantageusement agencée en liaison rotule avec la patte **7,** d'une part, et le bras **8,** d'autre part. L'information sur la position du point mobile **M1** est alors transmise à une unité de contrôle **4** qui permet de générer un signal sensoriel fonction de la charge du véhicule à son utilisateur.

Selon une autre variante, et tel que représenté à la figure 2, un tel dispositif **10** comporte un moyen de détermination de la position relative d'un point mobile **M2** d'une barre anti-roulis **12** par rapport à un point de référence **F2** solidaire d'un essieu **13** de véhicule. Le point mobile **M2** se déplace sensiblement verticalement de haut en bas ou de bas en haut lors du chargement ou du déchargement du véhicule. En effet, plus le véhicule est chargé, et plus le point mobile **M2** monte par rapport à l'essieu **13** du véhicule.

Les mouvements du point mobile **M2** sont transmis, via une patte **17** montée fixe sur l'essieu **13,** une biellette**16** et un bras **18,** à un capteur **19** solidaire de la barre anti-roulis **12.** Un tel capteur permet alors de déterminer les variations de position du point mobile **M2** par rapport à l'essieu **13.** L'information sur la position du point mobile **M2** est transmise à une unité de contrôle **14** qui permet de générer un signal sensoriel fonction de la charge du véhicule à son utilisateur.

Il ressort qu'un dispositif d'indication de la charge conforme à l'invention comporte de nombreux avantage et notamment :
- il permet, à partir de la mesure du déplacement d'un seul point mobile d'un essieu du véhicule, de calculer la charge appliquée à cet essieu ;
- il permet de s'adapter à une inclinaison du véhicule et de ne pas tenir compte d'un chargement localisé à l'intérieur de la zone de chargement du véhicule.

## Revendications

1. Dispositif (1, 10) d'indication de la charge d'un véhicule automobile **caractérisé en ce qu'**il comporte :
- un moyen de détermination de la position relative d'un point mobile (M1, M2) d'une barre anti-roulis (2, 12) par rapport à un point de référence (F1, F2) du véhicule, ledit point mobile (M1, M2) étant agencé au niveau d'une zone médiane de la barre anti-roulis (2, 12) ;
- une unité de contrôle (4, 14) apte à générer un signal sensoriel fonction de ladite position relative.

2. Dispositif selon la revendication 1, **caractérisé en ce que** le point de référence (F1) est solidaire d'un châssis (3) du véhicule.

3. Dispositif selon la revendication 1, **caractérisé en ce que** le point de référence (F2) est solidaire d'un essieu (13) du véhicule.

4. Dispositif selon la revendication 1, **caractérisé en ce que** l'unité de contrôle (4, 14) calcule une valeur à partir des positions respectives du point mobile (M1, M2) et du point de référence (F1, F2) et génère un signal sensoriel fonction de ladite valeur, selon une loi fonction de la géométrie.

5. Dispositif selon la revendication 1, **caractérisé en ce que** ledit moyen de détermination de position relative du point mobile (M1) comporte une biellette (6) assujettie en liaison rotule avec, d'une part, une patte d'accrochage (7) solidaire du point mobile (M1), et d'autre part, un bras (8) agencé en liaison pivot par rapport au point de référence (F1).

6. Dispositif selon la revendication 1, **caractérisé en ce que** ledit moyen de détermination de position relative du point mobile (M2) comporte une biellette (16) assujettie en liaison rotule avec, d'une part, une patte d'accrochage (17) solidaire du point de référence (F2), et d'autre part, un bras (18) agencé en liaison pivot par rapport au point mobile (M2).

7. Dispositif selon l'une des revendications 5 et 6, **caractérisé en ce qu'**il comporte un capteur (9, 19) apte à mesurer la position angulaire du bras (8, 18), et **en ce que** l'unité de contrôle (4,14) est apte à calculer la position relative du point mobile (M1, M2) en fonction de la valeur de l'angle mesuré par le capteur (9, 19).

8. Dispositif selon la revendication 7, **caractérisé en ce que** ledit capteur (9, 19) est choisi parmi le groupe comprenant les capteurs à effet Hall, les codeurs incrémentaux, les accéléromètres et les jauges de déformation.

9. Dispositif selon la revendication 1, **caractérisé en ce que** ledit signal sensoriel est de type sonore, visuel ou vibratoire.

10. Dispositif selon la revendication 1, **caractérisé en ce que** l'unité de contrôle (4, 14) est apte à générer un signal d'alarme lorsque la position relative du point mobile (M1, M2) par rapport au point de référence (F1, F2) dépasse une valeur de seuil prédéterminée.

## Patentansprüche

1. Ladungsanzeigevorrichtung (1, 10) eines Kraftfahrzeugs, **dadurch gekennzeichnet, dass** es:
- eine Vorrichtung zur Bestimmung der relativen Position eines mobilen Punktes (M1, M2) eines Stabilisators (2, 12) im Verhältnis zu einem Bezugspunkt (F1, F2) des Fahrzeugs, wobei dieser mobile Punkt (M1, M2) in Höhe eines mittleren Bereichs des Stabilisators (2, 12) vorgesehen ist;
- eine Kontrolleinheit (4, 14) umfasst, die in der Lage ist, ein sensorisches Signal zu erzeugen, das eine Funktion dieser relativen Position ist.

2. Vorrichtung gemäß Anspruch 1, **dadurch gekennzeichnet, dass** der Bezugspunkt (F1) fest mit einem Fahrgestell (3) des Fahrzeugs verbunden ist.

3. Vorrichtung gemäß Anspruch 1, **dadurch gekennzeichnet, dass** der Bezugspunkt (F2) fest mit einer Achse (13) des Fahrzeugs verbunden ist.

4. Vorrichtung gemäß Anspruch 1, **dadurch gekennzeichnet, dass** die Kontrolleinheit (4, 14) einen Wert ausgehend von den jeweiligen Positionen des mobilen Punktes (M1, M2) und des Referenzpunktes (F1, F2) berechnet und nach einem Gesetz, das Funktion der Geometrie ist, ein sensorisches Signal erzeugt, das eine Funktion dieses Wertes ist.

5. Vorrichtung gemäß Anspruch 1, **dadurch gekennzeichnet, dass** dieses Mittel zur Bestimmung des mobilen Punktes (M1) eine Steuerstange (6) enthält, die über eine Kugelgelenkverbindung einerseits mit einer mit dem mobilen Punkt (M1) fest verbundenen Befestigungsklammer (7) und andererseits mit einem in Schwenkverbindung im Verhältnis zum Referenzpunkt (F1) vorgesehenen Arm (8) verbunden ist.

6. Vorrichtung gemäß Anspruch 1, **dadurch gekennzeichnet, dass** dieses Mittel zur Bestimmung des mobilen Punktes (M2) ein Schaltgestänge (16) enthält, das über eine Kugelgelenkverbindung einerseits mit einer mit dem Referenzpunktes (F2) fest verbundenen Befestigungsklammer (17) und andererseits mit einem in Schwenkverbindung im Verhältnis zum mobilen Punktes (M1) vorgesehenen Arm (18) verbunden ist.

7. Vorrichtung gemäß einem der Ansprüche 5 und 6 und **dadurch gekennzeichnet, dass** sie einen Fühler (9, 19) umfasst, der in der Lage ist, die Winkelposition des Armes (8, 18) zu messen und dadurch dass die Kontrolleinheit (4, 14) in der Lage ist, die relative Position des mobilen Punktes (M1, M2) entsprechend dem Wert des vom Fühler (9, 19) gemessenen Wertes zu berechnen.

8. Vorrichtung gemäß Anspruch 7, **dadurch gekennzeichnet, dass** dieser Fühler (9, 19) aus der Gruppe ausgewählt wird, zu der Hall-Effekt- Sensoren, inkrementelle Codierer, Beschleunigungsmesser und Dehnungsmessstreifen gehören.

9. Vorrichtung gemäß Anspruch 1, **dadurch gekennzeichnet, dass** dieses sensorische Signal ein akustisches, visuelles oder Vibrationssignal ist.

10. Vorrichtung gemäß Anspruch 1, **dadurch gekennzeichnet, dass** die Kontrolleinheit (4, 14) in der Lage ist, ein Alarmsignal zu erzeugen, wenn die relative Position des mobilen Punktes (M1, M2) im Verhältnis zum Referenzpunkt (F1, F2) einen vorher festgelegten Schwellenwert übersteigt.

## Claims

1. A device (1, 10) indicating the load of a motor vehicle **characterized in that** it includes:
- a means of determining the relative position of a mobile point (M1, M 2) of an antiroll bar (2, 12), with respect to a point of reference (F1, F2) on a motor vehicle, the said mobile point (M1, M2) being arranged in the middle area of the antiroll bar (2, 12);
- A control unit (4, 14), capable of generating a sensorial signal according to the said relative position.

2. A device according to claim 1, **characterized in that** the point of reference (F1) is integral with the chassis (3) of the vehicle.

3. A device according to claim 1, **characterized in that** the point of reference (F2) is integral with an axle (13) of the vehicle.

4. A device according to claim 1, **characterized in that** the control unit (4, 14) calculates a value from the respective positions of mobile points (M1, M2) and the point of reference (F1, F2) and generates a sensorial signal according to said value, according to a geometrical law.

5. A device according to claim 1, **characterized in that** the said means of determining the relative position of the moving point (M1) comprises a connecting rod (6) cooperating as a swivel link with, on the one hand, the attaching lug (7) integral with the mobile points (M1), and on the other hand, an arm (8) arranged to form a pivoting link with respect to the point of reference (F1)

6. A device according to claim 1, **characterized in that** the said means of determining the relative position of the mobile points (M 2) has a connecting rod (16) cooperating as a swivel link with, on the one hand, an attaching lug (17), integral with the point of reference (F2) and, on the other hand, an arm (18) arranged as a pivoting link with respect to mobile point (M2).

7. A device according to one of claims 5 and 6, **characterized in that** it comprises a sensor (9, 19) capable of measuring the angular position of the arm (8, 18), and **in that** the control unit (4, 14) is capable of calculating the relative position of the mobile point (M1, M2) as a function of the value of the angle measured by the sensor (9, 19).

8. A device according to claim 7, **characterized in that** the said sensor (9, 19) is chosen from the group comprising Hall effect sensors, incremental encoders, accelerometers and deformation gauges.

9. A device according to claim 1, **characterized in that** the said sensorial signal is of the audible, visual or vibrational type.

10. A device according to claim 1, **characterized in that** the said control unit (4, 14) is capable of generating an alarm signal when the relative position of the mobile point (M1, M2) with respect to the point of reference (F1, F2) exceeds a predetermined threshold value.
